# EUROPÄISCHE PATENTSCHRIFT

(11) **EP 1 074 766 B1**
(45) Veröffentlichungstag und Bekanntmachung des Hinweises auf die Patenterteilung: **06.04.2005**
(21) Anmeldenummer: 00115686.8
(22) Anmeldetag: 21.07.2000
(51) Int. Cl.: F16H 59/02, G05G 1/12

(54) **Befestigung für einen Drehknopf an einem Fahrzeug-Schalthebel**
Device for connecting a rotatable knob to a vehicle shift lever
Dispositif pour fixer un bouton tournant à un levier de changement de vitesse pour véhicule

(30) Priorität: 31.07.1999 DE 19936265
(43) Veröffentlichungstag der Anmeldung: 07.02.2001
(73) Patentinhaber: DEERE & COMPANY, Moline, Illinois 61265-8098 (US)
(72) Erfinder: Rückert, Dieter, 68799 Reilingen (DE)
(74) Vertreter: Lau-Loskill, Philipp, Dipl.-Phys.

(56) Entgegenhaltungen:
- CH-A- 537 049
- DE-U- 29 516 875
- PATENT ABSTRACTS OF JAPAN vol. 017, no. 543 (P-1622), 29. September 1993 (1993-09-29) -& JP 05 150851 A (SONY CORP), 18. Juni 1993 (1993-06-18)
- DATABASE WPI Section EI, Week 198440 Derwent Publications Ltd., London, GB; Class T06, AN 1984-244424 XP002234789 & DE 33 10 496 A (BBC BROWN BOVERI) 27. September 1984 (1984-09-27)

## Beschreibung

Die Erfindung betrifft einen Sensor mit Betätigungseinrichtung, wobei der Sensor an einem Gehäuseteil befestigbar ist und eine Sensorwelle aufweist und die Betätigungseinrichtung ein sich drehbar an dem Gehäuseteil abstützendes Betätigungselement und Kupplungsmittel enthält. Die Kupplungsmittel dienen der Drehübertragung zwischen dem Betätigungselement und der Sensorwelle und gleichen Exzentrizitäten zwischen der Drehachse des Betätigungselements und der Sensorwelle aus. Die Erfindung betrifft des weiteren einen Schaltgriff für eine Fahrzeugsteuerung, an dem ein von Hand betätigbarer Sensor angeordnet ist.

Es ist eine Vielzahl von Sensoren oder Meßgebern bekannt, die sich an beliebigen Gehäuseteilen befestigen lassen. Das Meßwerk eines solchen Sensors läßt sich durch Verdrehen einer aus dem Sensorgehäuse ragenden Sensorwelle beeinflussen und gibt entsprechend dem Drehwinkel oder einer Verdrehung der Sensorwelle Signale aus. Eine Verdrehung läßt sich durch eine auf die Sensorwelle einwirkende Betätigungseinrichtung vornehmen, um ein gewünschtes Signal einzustellen. Häufig dient als Betätigungseinrichtung ein unmittelbar auf der Sensorwelle befestigter, von Hand betätigbarer Drehknopf. Eine derartige unmittelbare Verbindung ist jedoch aus verschiedenen Gründen nicht immer geeignet oder erwünscht.

Die gattungsbildende CH-PS 647 053 beschreibt eine Kupplung zwischen Rotationskörpern, die in zwei verschiedenen Teilen eines Gehäuses gelagert sind. Ein erster Rotationskörper ist eine in einem inneren Gehäuseteil gelagerte Walze, deren Drehstellung auf nicht näher beschriebene Weise in elektrische Daten umgesetzt wird. Ein zweiter Rotationskörper ist eine in einem Gehäuseoberteil gelagerte Welle, auf deren aus dem Gehäuse ragenden Ende ein Drehknopf sitzt. Die Welle ist mittels einer Kupplung formschlüssig mit der Walze verbunden. Die Kupplung ist aus zwei Teilen zusammengesetzt. Ein erster Teil der Kupplung besteht aus einem in die Walze eingelassenen Stift, der parallel zur Walzenachse und exzentrisch zu dieser verläuft. Ein zweiter Teil der Kupplung besteht aus einer konzentrisch auf der Welle befestigten Scheibe, die dem Stift zugewandte, sich im wesentlichen radial erstreckende Erhöhungen aufweist. Der Stift befindet sich zwischen zwei benachbarten Erhöhungen, wodurch beim Verdrehen des Drehknopfes eine der Erhöhungen auf den Stift einwirkt und somit die Walze ebenfalls verdreht wird. Hierdurch soll die Kupplung auch dann richtig arbeiten, wenn die Achsen der Walze und der Welle nicht genau übereinstimmen.

Es sind auch Sensoren, wie Potentiometer oder Encoder bekannt, die eine aus dem Sensorgehäuse herausragende Sensorwelle aufweisen, welche sich konzentrisch zu einem am Sensorgehäuse angeformten Gewindeabschnitt erstreckt. An dem aus dem Gewindeabschnitt herausragenden Ende der Sensorwelle ist unmittelbar ein Drehknopf zur Betätigung des Sensors befestigt, siehe zum Beispiel die CH 337049 A. Derartige Sensoren lassen sich an einem Gehäuseteil befestigen, indem der Gewindeabschnitt durch eine Bohrung in dem Gehäuseteil gesteckt wird und auf den Gewindeabschnitt eine Gewindemutter aufgedreht wird, so daß das Gehäuseteil zwischen Sensorgehäuse und Gewindemutter eingespannt wird. Beim Betätigen des Drehknopfes können jedoch Querkräfte auf die Sensorwelle übertragen werden, was bei empfindlichen Sensoren zu fehlerhaften Signalen führen kann.

Die der Erfindung zugrunde liegende Aufgabe wird darin gesehen, einen Sensor mit Betätigungseinrichtung der eingangs genannten Art anzugeben, die sich auf einfache Weise an einem Gehäuseteil befestigen lassen. Es soll vermieden werden, daß auf das Betätigungselement ausgeübte Querkräfte auf die Sensorwelle übertragen werden. Eine weitere der Erfindung zugrunde liegende Aufgabe wird darin gesehen, einen Schaltgriff für eine Fahrzeugsteuerung anzugeben, an dem ein von Hand betätigbarer Sensor derart angeordnet ist, daß Querkräfte, die auf ein Betätigungselement für den Sensor ausgeübt werden, nicht auf die Sensorwelle übertragen werden.

Die Aufgaben werden erfindungsgemäß durch eine der Lehren der Patentansprüche 1 und 14 gelöst. Weitere vorteilhafte Ausgestaltungen und Weiterbildungen der Erfindung gehen aus den Unteransprüchen hervor.

Es handelt sich bei der Erfindung um einen Sensor mit einer Betätigungseinrichtung, wobei der Sensor ein Sensorgehäuse aufweist. Aus dem Sensorgehäuse ragt eine verdrehbare Sensorwelle heraus, durch die Sensorsignale einstellbar sind. Das Sensorgehäuse enthält einen konzentrisch zur Sensorwelle verlaufenden Gewindeabschnitt, der durch eine hierfür vorgesehene Ausnehmung des Gehäuseteils eines beliebigen Bauteils steckbar ist. Auf den Gewindeabschnitt ist ein Lagerteil aufschraubbar, so daß das Gehäuseteil zwischen Sensorgehäuse und Lagerteil eingeklemmt wird und der Sensor am Gehäuseteil festgelegt ist. Die Betätigungseinrichtung enthält ein Betätigungselement, beispielsweise einen Drehknopf, und Kupplungsmittel. Das Betätigungselement stützt sich drehbar am Lagerteil und damit auch am Gehäuseteil ab. Durch baulich einfache Maßnahmen können hierdurch Querkräfte, die auf das Betätigungselement ausgeübt werden, von dem Lagerteil aufgenommen und in das Gehäuseteil eingeleitet werden. Die Sensorwelle wird damit nicht durch seitliche Belastungen des Betätigungselements beeinflußt. Die Kupplungsmittel dienen der Drehübertragung zwischen dem Betätigungselement und der Sensorwelle und gleichen Exzentrizitäten zwischen der Drehachse des Betätigungselements und der Sensorwelle aus. Die Erfindung bezieht sich auf alle Kupplungsmittel, die diese Anforderung erfüllen.

Um ein unerwünschtes Verdrehen zwischen Sensorgehäuse und Gehäuseteil auszuschließen, ist es zweckmäßig in den Gewindeabschnitt wenigstens eine Axialnut einzulassen, die der Aufnahme einer in die Ausnehmung des Gehäuseteils radial nach innen vorstehenden Nase dient.

Eine bevorzugte Ausgestaltung der Erfindung sieht vor, daß das Lagerteil wenigstens eine äußere zylindrische Lauffläche aufweist, die mit einer zylindrischen Innenfläche des Betätigungselements korrespondiert, um das Betätigungselement drehbar abzustützen. Das Spiel zwischen der Lauffläche und der Innenfläche soll ein leichtes Verdrehen des Betätigungselements gegenüber dem feststehenden Lagerteil ermöglichen.

Es ist auch von besonderem Vorteil, wenn das Lagerteil einen dem Sensorgehäuse zugewandten zylindrischen Ansatz aufweist, mit dem sich das Lagerteil am Gehäuseteil abstützt. Dieser Ansatz erstreckt sich in montiertem Zustand durch eine Ausnehmung in der Stirnwandung (oder Seitenwandung) des Betätigungselements. Um eine freie Drehung des Betätigungselements zu gewährleisten und dieses im montierten Zustand nicht festzuklemmen, ist der Ansatz etwas länger ausgebildet als es der Dicke der Seitenwandung entspricht.

Vorzugsweise ist das Betätigungselement wenigstens zweiteilig ausgebildet und besteht aus einem hülsenförmigen Betätigungsrad und einem stirnseitig am Betätigungsrad befestigbaren Deckel.

Eine einfache, kostengünstige Befestigung des Deckels am Betätigungsrad ist dadurch gegeben, daß das Betätigungsrad eine in eine zylindrische Innenfläche eingelassene Ringnut aufweist, in die der Außenrand des Deckels einrastbar ist.

Eine weitere bevorzugte Ausgestaltung der Erfindung sieht vor, daß der Deckel auf einfache Weise drehfest mit dem Betätigungsrad verbunden ist, indem er beispielsweise wenigstens eine radial nach außen vorstehende Nase aufweist, die in eine entsprechende Ausnehmung oder Kerbe des Betätigungselements eingreift.

Gemäß einer besonders bevorzugten Ausgestaltung der Erfindung ist als ein Kupplungsmittel ein zwischen Sensorwelle und Betätigungselement, insbesondere zwischen Sensorwelle und Deckel angeordnetes Ausgleichsteil vorgesehen, daß eine Drehmomentübertragung zwischen dem Betätigungselement und der Sensorwelle erlaubt und gleichzeitig Exzentrizitäten zwischen der Drehachse des Betätigungselements und der Sensorwelle ausgleicht, so daß die Sensorwelle durch keine nennenswerten Querkräfte belastet wird.

Eine einfach und kostengünstige Gestaltung der Kupplungsmittel ergibt sich dadurch, daß der Querschnitt der Sensorwelle und der Querschnitt einer Ausnehmung des Ausgleichsteils, durch die die Sensorwelle verläuft, je im wesentlichen D-förmig ausgebildet sind. Das radiale Spiel zwischen Sensorwelle und Ausnehmung in Richtung quer zur geraden Fläche der D-Form ist dabei gering, wodurch sich bei der Drehübertragung lediglich ein geringes Verdrehspiel ergibt. Das radiale Spiel in Richtung der geraden Fläche der D-Form ist hingegen ausreichend groß, um Exzentrizitäten zwischen dem Betätigungselement und der Sensorwelle auszugleichen.

Es ist unter Berücksichtigung von Kosten- und Montagegesichtspunkten auch vorteilhaft, an dem Betätigungselement bzw. an dem Deckel wenigstens einen außerhalb der Drehachse liegenden axial vorstehenden Vorsprung vorzusehen, der in eine hierfür ausgebildete Ausnehmung des Ausgleichsteils eingreift. Die genannte Ausnehmung kann beispielsweise auch durch vorstehende Erhöhungen gebildet sein, die in Drehrichtung beiderseits des Vorsprungs angeordnet sind. Es versteht sich, daß unter Beibehaltung der gleichen Wirkung der Vorsprung auch an dem Ausgleichsteil und die Ausnehmung an dem Betätigungselement angeordnet sein kann, so daß dies ebenfalls unter Schutz gestellt ist. Zwischen Vorsprung und Ausnehmung ist ein radiales Spiel vorgesehen, um fertigungsbedingte Exzentrizitäten zwischen dem Betätigungselement und der Sensorwelle ausgleichen zu können. In Umfangsrichtung sind Vorsprung und Ausnehmung derart aufeinander angepaßt, daß bei der Drehübertragung ein möglichst geringes Verdrehspiel auftritt.

Vorzugsweise sind zwei sich bezüglich der Drehachse gegenüberliegende Vorsprünge am Betätigungselement oder am Deckel vorgesehen, die in zwei in die Umfangsfläche des Ausgleichsteils eingelassene, sich bezüglich der Drehachse gegenüberliegende schlitzförmige Ausnehmungen eingreifen.

Eine bevorzugte Ausgestaltung der Erfindung sieht vor, daß das Lagerteil aus Metall und das Betätigungselement sowie die Kupplungsmittel aus Kunststoff bestehen. Dies ermöglicht eine wirtschaftliche Fertigung sowie ein zuverlässiges, verschleißfreies Zusammenwirken der Teile.

Die Erfindung ist besonders geeignet, wenn es sich bei dem Sensor um einen Encoder handelt, dessen Sensorwelle sich endlos in Schritten in beiden Drehrichtungen verdrehen läßt und der beim Verdrehen Signalimpulse abgibt. Beispielsweise wird bei jedem Drehschritt ein Signalimpuls ausgegeben. Derartige Encoder enthalten häufig Hallsensoren und sind relativ störanfällig, wenn Querkräfte auf die Sensorwelle übertragen werden.

Ein bevorzugter Anwendungsfall für den erfindungsgemäßen Sensor mit Betätigungseinrichtung ist bei Schaltgriffen gegeben, wie sie für eine Fahrzeugsteuerung verwendet werden. In dem Schaltgriffgehäuse ist eine Ausnehmung eingelassen, durch die sich die Sensorwelle und der Gewindeabschnitt erstreckt. Das Betätigungselement stützt sich, wie bereits beschrieben, über ein Lagerteil am Schaltgriffgehäuse ab.

Eine bevorzugte Ausgestaltung des erfindungsgemäßen Schaltgriffs sieht vor, daß das Schaltgriffgehäuse im wesentlichen hohl ausgebildet ist und den Sensor einschließt. Die Sensorwelle und der Gewindeabschnitt des Sensors erstrecken sich durch eine Ausnehmung im Schaltgriffgehäuse nach außen. Auf den Gewindeabschnitt ist ein Lagerteil aufschraubbar, um den Sensor am Schaltgriffgehäuse zu befestigen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Explosionsdarstellung mit der Gehäusehälfte eines Schaltgriffs und mit einem Sensor mit Betätigungseinrichtung gemäß der Erfindung,
- Fig. 2: einen Längsschnitt des am Schaltgriff montierten Sensors mit Betätigungseinrichtung gemäß Fig. 1 und
- Fig. 3: einen vergrößert dargestellten Querschnitt des Lagerteils und der Sensorwelle der erfindungsgemäßen Einrichtung.

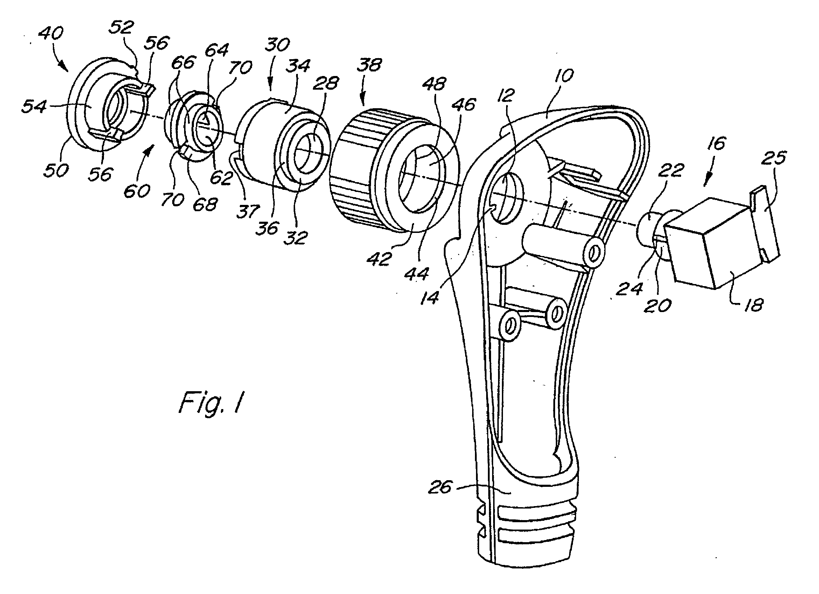

Aus Fig. 1 geht eine Gehäusehälfte 10 eines hohlen Schaltgriffs oder Schalthebels für eine Fahrzeugsteuerung hervor. Im oberen Bereich des Gehäuseteils 10 ist eine kreisförmige Ausnehmung 12 eingelassen, in die radial nach innen eine Nase 14 vorsteht. Rechts neben dem Gehäuseteil 10 ist ein Sensor 16 dargestellt, der ein Sensorgehäuse 18 aufweist, von dem ein Gewindeabschnitt 20 hervorsteht. Aus dem Gewindeabschnitt 20 des Sensors 16 tritt eine Sensorwelle 22 aus, die konzentrisch zum Gewindeabschnitt 20 verläuft.

In den Gewindeabschnitt 20 ist eine Axialnut 24 eingelassen, die mit der in der Ausnehmung 12 ausgebildeten Nase 14 korrespondiert. Zur Montage wird der Gewindeabschnitt 20 derart in die Ausnehmung 12 eingesteckt, daß die Axialnut 24 die Nase 14 aufnimmt und so ein Verdrehen des Sensors 16 gegenüber dem Gehäuseteil 10 verhindert. Das Sensorgehäuse 18 befindet sich im montierten Zustand vollständig innerhalb des Schaltgriffs.

Seitlich ragt aus dem Sensorgehäuse 18 eine Leiterplatte 25 heraus, von der aus nicht gezeigte elektrische Anschlußleitungen durch den hohlen Schaft 26 des Schaltgriffs geführt sind.

Auf den Gewindeabschnitt 20 des Sensorgehäuses 18 läßt sich das Innengewinde 28 eines hülsenförmigen Lagerteils 30 aufschrauben. Das Lagerteil 30 weist eine Stirnfläche 32 auf, mit der es im montierten Zustand derart an einer äußeren Seitenfläche des Gehäuseteils 10 anliegt, daß das Gehäuseteil 10 zwischen dem Sensorgehäuse 18 und dem Lagerteil 30 eingespannt wird. Das Lagerteil 30 weist eine äußere zylindrische Lauffläche 34 und einen sich daran anschließenden zylindrischen Ansatz 36 auf. Auf der zur Stirnseite 32 gegenüberliegenden Seite des Lagerteils 30 sind stirnseitig Nuten 37 eingelassen, an denen ein Werkzeug angesetzt werden kann, um das Lagerteil 30 auf den Gewindeabschnitt 20 des Sensors 16 aufzuschrauben.

Das Betätigungselement für den Sensor 16 besteht aus einem von Hand bedienbaren hülsenförmigen Betätigungsrad 38 und einem als Mitnehmer ausgebildeten Deckel 40. Die Außenkontur des Betätigungsrades 38 ist geriffelt, um die Betätigung zu erleichtern. In der vorderen sichtbaren Stirnwandung 42 des Betätigungsrades 38 befindet sich eine kreisförmige Ausnehmung 44. Im Inneren des Betätigungsrades 38 ist eine zylindrische Innenfläche 46 ausgebildet.

Zur Montage wird das Lagerteil 30 von links in das Betätigungsrad 38 gesteckt und auf den Gewindeabschnitt 20 des Sensorgehäuses 18 geschraubt. Die Dicke der Stirnwandung 44 ist etwas geringer als die Länge des Ansatzes 36, so daß sich ein Spiel für die Stirnwandung 44 ergibt. Der Durchmesser der Ausnehmung 44 ist etwas größer als der Durchmesser des Ansatzes 36, und der Durchmesser der Innenfläche 46 ist etwas größer als der Durchmesser der Lauffläche 34. Durch diese Dimensionierung wird das Betätigungsrad 38 einerseits von dem Lagerteil 30 geführt und abgestützt und läßt sich andererseits frei gegenüber dem Lagerteil 30 verdrehen.

Im Bereich der zur Ausnehmung 44 abgewandten Seite der Innenfläche 46 des Betätigungsrades 38 ist eine Ringnut 48 eingelassen, die der Aufnahme des Außenrandes 50 des kreisförmigen Deckels 40 dient. Die Dimensionierung ist derart gewählt, daß sich der Deckel 40 in die Ringnut 48 drücken läßt und dort verrastet. Vom Außenrad 50 des Deckels 40 steht eine Nase 52 radial vor. Diese greift in montiertem Zustand in eine entsprechende, in Fig. 1 nicht sichtbare Ausnehmung oder Kerbe des Betätigungsrades 38 und bildet eine Verdrehsicherung zwischen Betätigungsrad 38 und Deckel 40, so daß eine Übertragung von Drehbewegungen möglich ist.

Von der in Fig. 1 sichtbaren Innenseite des Deckels 40 stehen ein rohrförmiger Ansatz 54 sowie zwei außerhalb der Drehachse angeordnete, axial ausgerichtete Vorsprünge 56 vor, die bezüglich der Drehachse zueinander diametral gegenüberliegen.

Als Kupplungsmittel zwischen der Sensorwelle 22 und dem Betätigungselement, bestehend aus Deckel 40 und Betätigungsrad 38, ist ein hülsenförmig ausgebildetes Ausgleichsteil 60 vorgesehen, durch welches sich Drehbewegungen übertragen lassen und welches Exzentrizitäten zwischen der Drehachse des Betätigungselements und der Sensorwelle 22 ausgleicht.

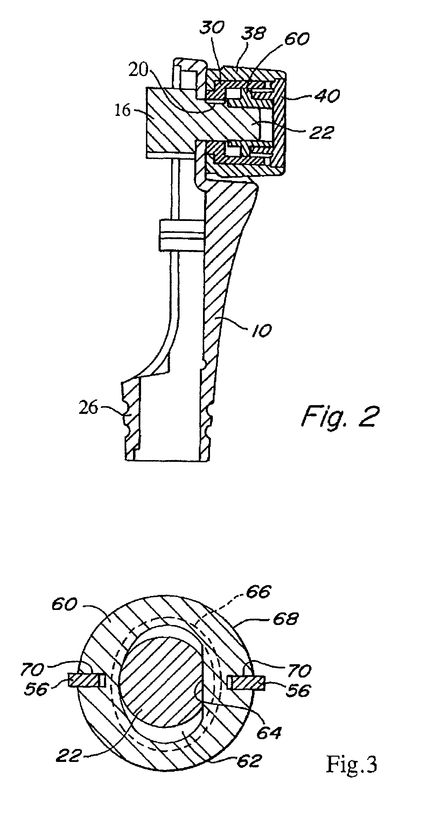

Das Ausgleichsteil 60 läßt sich mit seiner axialen Ausnehmung 62 auf die Sensorwelle 22, deren Querschnitt D-förmig ausgebildet ist (siehe Fig. 3), d. h. deren äußere Zylinderfläche an einer Seite abgeflacht ist, aufstecken. Der Querschnitt der axialen Ausnehmung 62 des Ausgleichsteils 60 ist im wesentlichen oval. An einer Seite dieses Querschnitts steht ein flacher Vorsprung 64 nach innen vor, so daß der Querschnitt ebenfalls im wesentlichen D-förmig ist. Die Ausnehmung 62 des Ausgleichsteils 60 ist bezüglich der Sensorwelle 22 so bemessen, daß das radiale Spiel zwischen Sensorwelle 22 und Ausnehmung 62 in Richtung der kleinen Halbachse der Ellipse, d. h. quer zur geraden Seite des flachen Vorsprungs 64, gering ist. Dabei liegen die geraden Flächen der D-Formen aufeinander, so daß sich Drehbewegungen bei geringem Drehspiel übertragen lassen. In Richtung der großen Halbachse der Ellipse, also längs der geraden Seite des flachen Vorsprungs 64, ist das Spiel hingegen ausreichend groß, um einen axialen Versatz zwischen Sensorwelle 22 und Betätigungselement auszugleichen.

Das Ausgleichsteil 60 weist eine im wesentlichen zylindrische Außenfläche 66 auf und läßt sich teilweise in den Ansatz 54 des Deckels 40 stecken. Im mittleren Bereich der zylindrischen Außenfläche 66 ist ein vorstehender ringförmiger Bund 68 angeformt, in dessen Außenfläche zwei sich gegenüberliegende Ausnehmungen oder Schlitze 70 eingelassen sind. Die Schlitze 70 sind derart ausgebildet, daß sie die Vorsprünge 56 des Deckels 40 aufnehmen. Die radiale Tiefe der Schlitze 70 gewährleistet ein ausreichendes Spiel, um eine radiale Bewegung zwischen den Vorsprüngen 56 und den Schlitzen 70 zuzulassen. Damit kann ein axialer Versatz zwischen Sensorwelle 22 und Betätigungselement ausgeglichen werden. In Umfangsrichtung ist das Spiel zwischen den Vorsprüngen 56 und den Schlitzen 70 jedoch gering, um bei der Übertragung von Drehbewegungen einen möglichst geringen Totgang zu haben.

Die Ausrichtung der ovalen Ausnehmung 62 ist um 90° zu der Lage der Schlitze 70 versetzt. Damit läßt die Ausbildung der ovalen Ausnehmung 62 eine Ausgleichsbewegung in eine erste radiale Richtung zu während die Ausbildung der Schlitze 70 eine Ausgleichsbewegung in eine zweite zur ersten Richtung senkrechte radiale Richtung zuläßt. Das Drehspiel bleibt dennoch relativ gering.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten.

## Patentansprüche

1. Sensor mit Betätigungseinrichtung, wobei der Sensor (16) an einem Gehäuseteil (10) befestigbar ist und eine Sensorwelle (22) aufweist und die Betätigungseinrichtung ein sich drehbar an dem Gehäuseteil (10) abstützendes Betätigungselement (38, 40) sowie Kupplungsmittel (60) enthält, welche der Drehübertragung zwischen dem Betätigungselement (38, 40) und der Sensorwelle (22) dienen und Exzentrizitäten zwischen der Drehachse des Betätigungselements (38, 40) und der Sensorwelle (22) ausgleichen, **dadurch gekennzeichnet, daß** das Sensorgehäuse (18) einen konzentrisch zur Sensorwelle (22) verlaufenden Gewindeabschnitt (20) aufweist, der durch eine hierfür vorgesehene Ausnehmung (12) des Gehäuseteils (10) steckbar ist, daß zur Befestigung des Sensorgehäuses (18) am Gehäuseteil (10) ein Lagerteil (30) auf den Gewindeabschnitt (20) aufschraubbar ist, und daß das Lagerteil (30) das Betätigungselement (38, 40) drehbar abstützt.

2. Sensor mit Betätigungseinrichtung nach Anspruch 1, **dadurch gekennzeichnet, daß** in den Gewindeabschnitt (20) wenigstens eine Axialnut (24) eingelassen ist, die der Aufnahme einer in der Ausnehmung (12) des Gehäuseteils (10) vorstehenden Nase (14) dient.

3. Sensor mit Betätigungseinrichtung nach Anspruch 1 oder 2, **dadurch gekennzeichnet, daß** das Lagerteil (30) wenigstens eine äußere zylindrische Lauffläche (34) aufweist, die mit einer zylindrischen Innenfläche (46) des Betätigungselements (38) korrespondiert, um das Betätigungselement (38) drehbar abzustützen.

4. Sensor mit Betätigungseinrichtung nach einem der Ansprüche 1 bis 3, **dadurch gekennzeichnet, daß** das Lagerteil (30) einen zylindrischen Ansatz (36) aufweist, der sich durch eine Ausnehmung (44) in der Stirnwandung (42) des Betätigungselements (38) erstreckt und etwas länger ist als die Dicke der Stirnwandung (42).

5. Sensor mit Betätigungseinrichtung nach einem der Ansprüche 1 bis 4, **dadurch gekennzeichnet, daß** das Betätigungselement aus einem hülsenförmigen Betätigungsrad (38) und einem stirnseitig am Betätigungsrad (38) befestigbaren Deckel (40) besteht.

6. Sensor mit Betätigungseinrichtung nach Anspruch 5, **dadurch gekennzeichnet, daß** das Betätigungsrad (38) eine in eine zylindrische Innenfläche (46) eingelassene Ringnut (48) aufweist, in die der Außenrand (50) des Deckels (40) einrastbar ist.

7. Sensor mit Betätigungseinrichtung nach Anspruch 5 oder 6, **dadurch gekennzeichnet, daß** der Deckel (40) wenigstens eine radial nach Außen vorstehende Nase (52) aufweist, die in eine entsprechende Ausnehmung des Betätigungsrades (38) eingreift.

8. Sensor mit Betätigungseinrichtung nach einem der Ansprüche 1 bis 7, **dadurch gekennzeichnet, daß** als ein Kupplungsmittel ein zwischen Sensorwelle (22) und Betätigungselement (38, 40), insbesondere zwischen Sensorwelle (22) und Deckel (40) angeordnetes Ausgleichsteil (60) vorgesehen ist.

9. Sensor mit Betätigungseinrichtung nach Anspruch 8, **dadurch gekennzeichnet, daß** der Querschnitt der Sensorwelle (22) und der Querschnitt einer Ausnehmung (62) des Ausgleichsteils (60), durch die die Sensorwelle (22) verläuft, je im wesentlichen D-förmig ausgebildet sind, und daß das radiale Spiel zwischen Sensorwelle (22) und Ausnehmung (62) in Richtung quer zur geraden Fläche der D-Form gering und in Richtung der geraden Fläche der D-Form ausreichend groß ist, um Exzentrizitäten zwischen dem Betätigungselement (38, 40) und der Sensorwelle (22) auszugleichen.

10. Sensor mit Betätigungseinrichtung nach Anspruch 8 oder 9, **dadurch gekennzeichnet, daß** an dem Betätigungselement (38, 40) bzw. an dem Deckel (40) wenigstens ein außerhalb der Drehachse liegender axial vorstehender Vorsprung (56) vorgesehen ist, der in eine Ausnehmung (70) des Ausgleichsteils (60) eingreift, wobei ein radiales Spiel zwischen Vorsprung (56) und Ausnehmung (70) gegeben ist, um Exzentrizitäten zwischen dem Betätigungselement (38, 40) und der Sensorwelle (22) auszugleichen.

11. Sensor mit Betätigungseinrichtung nach Anspruch 10, **dadurch gekennzeichnet, daß** zwei sich axial gegenüberliegende Vorsprünge (56) vorgesehen sind und daß als Ausnehmungen zwei in die Umfangsfläche des Ausgleichsteils eingelassene, sich gegenüberliegende Schlitze (70) dienen.

12. Sensor mit Betätigungseinrichtung nach einem der Ansprüche 1 bis 11, **dadurch gekennzeichnet, daß** das Lagerteil (30) aus Metall und das Betätigungselement (38, 40) sowie die Kupplungsmittel (60) aus Kunststoff bestehen.

13. Sensor mit Betätigungseinrichtung nach einem der Ansprüche 1 bis 12, **dadurch gekennzeichnet, daß** der Sensor (16) ein Encoder ist, dessen Sensorwelle (22) sich endlos in Schritten verdrehen läßt und der beim Verdrehen Signalimpulse abgibt.

14. Schaltgriff für eine Fahrzeugsteuerung, **gekennzeichnet durch** ein wenigstens eine Ausnehmung (12) aufweisendes Gehäuseteil (10), an dem sich ein nach einem der Ansprüche 1 bis 13 ausgebildeter Sensor (16) mit Betätigungseinrichtung abstützt.

15. Schaltgriff nach Anspruch 14, **dadurch gekennzeichnet, daß** das Schaltgriffgehäuse (10) im wesentlichen hohl ausgebildet ist und den Sensor (16) einschließt, dessen Sensorwelle (22) und Gewindeabschnitt (20) sich durch die Ausnehmung (12) im Schaltgriffgehäuse (10) nach außen erstrecken, und daß auf den Gewindeabschnitt (20) ein Lagerteil (30) aufschraubbar ist, um den Sensor (16) am Schaltgriffgehäuse (10) zu befestigen.

## Claims

1. A sensor with an actuating device, wherein the sensor (16) can be fixed on a housing part (10) and comprises a sensor shaft (22) and the actuating device includes an actuating element (38, 40) rotatably supported on the housing part (10), as well as coupling means (60) which serve to transfer rotation between the actuating element (38, 40) and the sensor shaft (22) and to compensate for eccentricity between the axes of rotation of the actuating element (38, 40) and the sensor shaft (22), **characterized in that** the sensor housing (18) comprises a threaded section (20) concentric with the sensor shaft (22) and which can be inserted through an opening (12) provided for it in the housing part (10), **in that** a bearing part (30) can be screwed on to the threaded section (20) to fix the sensor housing (18) on the housing part (10), and **in that** the bearing part (30) rotatably supports the actuating element (38, 40).

2. A sensor with an actuating device according to claim 1, **characterized in that** at least one axial groove (24) is formed in the threaded section (20) and serves to receive a lug (14) projecting into the opening (12) of the housing part (10).

3. A sensor with an actuating device according to claim 1 or 2, **characterized in that** the bearing part (30) has at least one external cylindrical running surface (34), which corresponds to a cylindrical internal surface (46) of the actuating element (38), in order to support the actuating element (38) rotatably.

4. A sensor with an actuating device according to any of claims 1 to 3, **characterized in that** the bearing part (30) comprises a cylindrical projection (36) which extends through an opening (44) in the front wall (42) of the actuating element (38) and is somewhat longer than the thickness of the front wall (42).

5. A sensor with an actuating device according to any of claims 1 to 4, **characterized in that** the actuating element consists of an actuating wheel (38) of sleeve form and a cover (40) which can be fixed at the front on the actuating wheel (38).

6. A sensor with an actuating device according to claim 5, **characterized in that** the actuating wheel (38) comprises an annular groove (48) which is formed in a cylindrical internal surface (46) and into which the outer edge (50) of the cover (40) can snap.

7. A sensor with an actuating device according to claim 5 or 6, **characterized in that** the cover (40) has at least one lug (52) projecting radially outwards and which engages in a corresponding recess in the actuating wheel (38).

8. A sensor with an actuating device according to any of claims 1 to 7, **characterized in that** a compensating part (60) is provided as a coupling means arranged between the sensor shaft (22) and the actuating element (38, 40), especially between the sensor shaft (22) and the cover (40).

9. A sensor with an actuating device according to claim 8, **characterized in that** the cross-section of the sensor shaft (22) and the cross-section of an opening (62) in the compensating part (60), through which the sensor shaft (22) runs, are each of essentially D shape and **in that** the radial play between the sensor shaft (22) and the opening (62) is small in the direction transverse to the flat face of the D shape and is sufficiently large in the direction of the flat face of the D shape to compensate for eccentricity between the actuating element (38, 40) and the sensor shaft (22).

10. A sensor with an actuating device according to claim 8 or 9, **characterized in that** at least one axially projecting projection (56) lying outside the axis of rotation is provided on the actuating element (3 8, 40) or on the cover (40) and engages in a recess (70) in the compensating part (60), wherein radial play is provided between the projection (56) and the recess (70), in order to compensate for eccentricity between the actuating element (38, 40) and the sensor shaft (22).

11. A sensor with an actuating device according to claim 10, **characterized in that** two axially opposed projections (56) are provided and **in that** two opposed slots (70) formed in the peripheral surface of the compensating part serve as recesses.

12. A sensor with an actuating device according to any of claims 1 to 11, **characterized in that** the bearing part (30) consists of metal and the actuating element (38, 40) and the coupling means (60) consist of plastics material.

13. A sensor with an actuating device according to any of claims 1 to 12, **characterized in that** the sensor (16) is an encoder whose sensor shaft (22) can turn continuously in steps and which issues signal pulses as it rotates.

14. A control handle for a vehicle control, **characterized by** a housing part (10) having at least one opening (12), on which is supported a sensor (16) with an actuating device according to any of claims 1 to 13.

15. A control handle according to claim 14, **characterized in that** the control handle housing (10) is of essentially hollow form and encloses the sensor (16), whose sensor shaft (22) and threaded section (20) extend out through the opening (12) in the control handle housing (10), and **in that** a bearing part (30) can be screwed on to the threaded section (20) in order to fix the sensor (16) on the control handle housing (10).

## Revendications

1. Capteur avec système d'actionnement, du type dans lequel le capteur (16) peut être fixé à une portion de boîtier (10), et présente un arbre de capteur (22), le système d'actionnement comportant un élément d'actionnement (38, 40) s'appuyant rotatif sur la portion de boîtier (10), ainsi qu'un organe d'accouplement (60), qui servent à transférer la rotation entre l'élément d'actionnement (38, 40) et l'arbre de capteur (22), et à compenser les excentricités existant entre les axes de rotation de l'élément d'actionnement (38, 40) et l'arbre de capteur (22), **caractérisé en ce que** le boîtier de capteur (18) présente une section filetée (20) concentrique à l'arbre de capteur (22), qui peut être insérée à travers une ouverture (12) prévue à cet effet dans la portion de boîtier (10), **en ce qu'**une portion formant palier (30) peut être vissée sur la section filetée (20), en vue de la fixation du boîtier de capteur (18) sur la portion de boîtier (10), et **en ce que** l'élément d'actionnement (38, 40) s'appuie sur la portion formant palier (30) de façon à pouvoir entrer en rotation.

2. Capteur avec système d'actionnement selon la revendication 1, **caractérisé en ce que** dans la section filetée (20) est pratiquée au moins une rainure axiale (24), qui sert à accueillir un relief (14) de l'ouverture (12) de la portion de boîtier (10).

3. Capteur avec système d'actionnement selon l'une ou l'autre des revendications 1 ou 2, **caractérisé en ce que** la portion formant palier (30) présente au moins une surface d'appui cylindrique extérieure (34), qui correspond à une surface cylindrique intérieure (46) de l'élément d'actionnement (38), en vue de permettre un appui rotatif à l'élément d'actionnement (38).

4. Capteur avec système d'actionnement selon l'une quelconque des revendications 1 à 3, **caractérisé en ce que** la portion formant palier (30) présente un appendice cylindrique (36), qui s'étend à travers un évidement (44) de la paroi frontale (42) de l'élément d'actionnement (38), et qui est légèrement plus long que l'épaisseur de la paroi frontale (42).

5. Capteur avec système d'actionnement selon l'une quelconque des revendications 1 à 4, **caractérisé en ce que** l'élément d'actionnement se compose d'une roue d'actionnement (38) en forme de douille, et d'un couvercle (40) pouvant être fixé au côté frontal de la roue d'actionnement (38).

6. Capteur avec système d'actionnement selon la revendication 5, **caractérisé en ce que** la roue d'actionnement (38) présente une rainure annulaire (48) pratiquée dans une surface intérieure cylindrique (46), dans laquelle peut être insérée le bord extérieur (50) du couvercle (40).

7. Capteur avec système d'actionnement selon l'une ou l'autre des revendications 5 ou 6, **caractérisé en ce que** le couvercle (40) présente au moins un relief dépassant radialement vers l'extérieur (52), et qui s'accroche dans un creux correspondant de la roue d'actionnement (38).

8. Capteur avec système d'actionnement selon l'une quelconque des revendications 1 à 7, **caractérisé en ce qu'**est prévu, en tant qu'organe d'accouplement, un organe de compensation (60) placé entre l'arbre de capteur (22) et l'élément d'actionnement (38, 40), et plus particulièrement entre l'arbre de capteur (22) et le couvercle (40).

9. Capteur avec système d'actionnement selon la revendication 8, **caractérisé en ce que** la section transversale de l'arbre de capteur (22), et la section transversale de l'évidement (62) de l'organe de compensation (60) à travers lequel passe l'arbre (22) ont chacune pratiquement une forme de D, et **en ce que** le jeu radial entre l'arbre (22) et l'évidement (62) est très faible dans la direction perpendiculaire à la surface plane de la forme en D, et suffisamment important dans la direction des surfaces planes de la forme en D, pour compenser les excentricités entre l'élément d'actionnement (38, 40) et l'arbre de capteur (22).

10. Capteur avec système d'actionnement selon l'une ou l'autre des revendications 8 ou 9, **caractérisé en ce que**, sur l'élément d'actionnement (38, 40), ou sur le couvercle (40), est prévu au moins un prolongement axial (56), situé hors de l'axe de rotation et qui s'engage dans un creux (70) de l'organe de compensation (60), un jeu radial étant créé entre le prolongement (56) et le creux (70), en vue de compenser les excentricités entre l'élément d'actionnement (38, 40) et l'arbre de capteur (22).

11. Capteur avec système d'actionnement selon la revendication 10, **caractérisé en ce que** sont prévus deux prolongements axialement en vis-à-vis, et **en ce que** dans la surface périphérique de l'organe de compensation sont ménagées des rainures opposées (70) servant de creux.

12. Capteur avec système d'actionnement selon l'une quelconque des revendications 1 à 11, **caractérisé en ce que** la portion formant palier (30) se compose de métal, et l'élément d'actionnement (38, 40), ainsi que l'organe d'accouplement (60) se composent de matière plastique.

13. Capteur avec système d'actionnement selon l'une quelconque des revendications 1 à 12, **caractérisé en ce que** le capteur (16) est un encodeur dont l'arbre (22) est entraîné en rotation pas-à-pas sans interruption, et qui délivre des impulsions au cours de sa rotation.

14. Poignée de commande pour la commande d'un véhicule, **caractérisée par** au moins une portion de boîtier (10) présentant un évidement (12), sur lequel prend appui un capteur (16) avec un système d'actionnement, conforme à l'une quelconque des revendications 1 à 13.

15. Poignée selon la revendication 14, **caractérisée en ce que** le boîtier de la poignée (10) est essentiellement creux, et renferme le capteur (16), dont l'arbre de capteur (22) et la section filetée (20) s'étendent vers l'extérieur à travers l'évidement (12) pratiqué dans le boîtier de poignée (10), et **en ce que**, sur la section filetée (20), peut être vissée une portion formant palier (30), en vue de fixer le capteur (16) sur le boîtier de poignée (10).
